# EUROPEAN PATENT APPLICATION

(11) **EP 4 575 630 A1**
(43) Date of publication of application: **25.06.2025**
(21) Application number: 24203392.6
(22) Date of filing: 27.09.2024
(51) Int. Cl.: G02F 1/35, H01S 3/00

(54) **APPARATUS AND METHOD FOR OPTICAL COMB GENERATION**

(30) Priority: 19.12.2023 US 202318545774
(71) Applicant: Honeywell International Inc., Charlotte, NC 28202 (US)
(72) Inventor: PUCKETT, Matthew Wade, Charlotte, 28202 (US); HOYT, Chad, Charlotte, 28202 (US); WU, Jianfeng, Charlotte, 28202 (US); JIANG, Wei Charles, Charlotte, 28202 (US); NELSON, Karl D., Charlotte, 28202 (US); SALMAN, Jad, Charlotte, 28202 (US)
(74) Representative: Haseltine Lake Kempner LLP

(57) **Abstract**

Apparatuses and methods are provided for generating an optical frequency comb with a standing wave optical resonator including a Bragg grating. The Bragg grating shifts alternatively higher and lower wavelengths of resonances in a stop bandwidth of the Bragg grating. A resonance in the stop bandwidth whose wavelength is shifted higher can be used to compensate for shifting of the wavelength lower due to the Kerr effect.

## Description

### STATEMENT REGARDING FEDERALLY SPONSORED RESEARCH OR

### DEVELOPMENT

This invention was made with Government support. The Government has certain rights in the invention.

### BACKGROUND

A travelling wave optical resonator is used to generate an optical frequency comb. A travelling wave optical resonator includes a Bragg grating to compensate for a shift in a resonance closest to an optical pump signal due to the Kerr effect. However, travelling wave optical resonators with Bragg gratings require relatively higher optical pump signal power to generate a frequency comb because resonances of the travelling wave optical resonator in a stop bandwidth of a Bragg grating are split into two separate resonances by the Bragg grating. Each pair of split resonances includes a resonance shifted higher in wavelength and a resonance shift lower in wavelength with respect to a wavelength of the resonance prior to splitting. Requiring a relatively higher power optical source to provide the relatively higher optical pump signal power is undesirable because it is energy inefficient.

### SUMMARY

In some aspects, the techniques described herein relate to a standing wave optical resonator configured to generate an optical frequency comb, the standing wave optical resonator including: a first mirror (FM) including a first FM port configured to transmit a portion of the optical frequency comb, and a second FM port; a Bragg grating (BG) including a first BG port and a second BG port, wherein the first BG port is optically coupled to the second FM port, and wherein the Bragg grating is configured to alternately shift, lower and higher in wavelength, resonances of the standing wave optical resonator in a stop bandwidth of the Bragg grating; and a second mirror (SM) including a first SM port optically coupled to the second BG port.

In some aspects, the techniques described herein relate to a method for generating an optical frequency comb with a standing wave optical resonator including a Bragg grating, a first mirror (FM), a second mirror (SM), the method including: receiving, at a first FM port of the first mirror, an optical pump signal having a carrier wavelength in a stop bandwidth of the Bragg grating and which is closer to a resonance shifted higher in wavelength than to an adjacent resonance shifted lower in frequency, wherein the first mirror is optically coupled to a first port of the Bragg grating and the second mirror is optically coupled to a second port of the Bragg grating; transmitting a portion of the optical pump signal into the standing wave optical resonator; with the Bragg grating, alternately shifting, lower and higher in wavelength, resonances of the standing wave optical resonator in the stop bandwidth of the Bragg grating; generating the optical frequency comb in the standing wave optical resonator; and transmitting a portion of the optical frequency comb from the first FM port of the first mirror.

In some aspects, the techniques described herein relate to an apparatus for generating an optical frequency comb, the apparatus including: a non-reciprocal optical device (NROD) including a first NROD port configured to receive an optical pump signal, a second NROD port configured to transmit a portion of the optical pump signal and to receive a portion of the optical frequency comb, and a third NROD port configured to transmit a portion of the portion of the optical frequency comb; and a standing wave optical resonator, including: a first mirror (FM) including (a) a first FM port optically coupled to the first NROD port and configured to transmit the portion of the optical frequency comb to the first NROD port and to receive the portion of the optical pump signal from the first NROD port, and (b) a second FM port; a Bragg grating (BG) including a first BG port and a second BG port, wherein the first BG port is optically coupled to the second FM port, and wherein the Bragg grating is configured to alternately shift, lower and higher in wavelength, resonances of the standing wave optical resonator in a stop bandwidth of the Bragg grating, wherein the optical pump signal has a carrier wavelength in the stop bandwidth and which is closer to a resonance shifted higher in wavelength than to an adjacent resonance shifted lower in wavelength; and a second mirror (SM) including a first SM port optically coupled to the second BG port.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates a block diagram of one embodiment of a standing wave optical resonator;
FIG. 2A illustrates a block diagram of one embodiment of an optical loop mirror;
FIG. 2B illustrates a plan view of a plane mirror on or over a substrate;
FIG. 2C illustrates a cross section of one embodiment of planar optical waveguide used to form the standing wave optical resonator or one or more components thereof;
FIG. 3A illustrates a reflectivity, at one port of the Bragg grating, with respect to optical wavelength;
FIG. 3B illustrates a diagram of one embodiment of wavelength translation of a portion of resonances of the standing wave optical resonator due to the Bragg grating; and
FIG. 4 illustrates a flow diagram of an exemplary method of generating an optical frequency comb in a standing wave optical resonator including a Bragg grating.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, each method presented in the drawing figures and the specification is not to be construed as limiting the order in which the individual steps may be performed. The following detailed description is not to be taken in a limiting sense.

A standing wave optical resonator (SWOR)¹ utilizing a Bragg grating may be used to generate an optical frequency comb² with a relatively lower optical pump signal power (in comparison to a travelling wave optical resonator). This is because, in a standing wave optical resonator, the Bragg grating shifts the resonances of the standing wave optical resonator (in a stop bandwidth of the Bragg grating) alternatively higher and lower in wavelength - instead of splitting each resonance (in the stop bandwidth of the Bragg grating) into two resonances as in a travelling wave resonator. The stop bandwidth of a Bragg grating is a bandwidth in which the reflectivity at each port of the Bragg grating is greater than zero.

When an optical pump signal is injected into a standing wave optical resonator without dispersion compensation such as provided by a Bragg grating, a wavelength of a resonance closest to a carrier wavelength of the optical pump signal is shifted lower in wavelength due to the Kerr effect. Thus, resonances of the standing wave optical resonator without dispersion compensation (excluding the resonance shifted due to the Kerr effect) are not separated by integer multiples of a constant wavelength from the resonance shifted due to the Kerr effect. For this reason, the standing wave optical resonator without dispersion compensation is unable to generate or efficiently generate an optical frequency comb by four wave mixing.

Exemplary embodiments of the invention include a Bragg grating to provide dispersion compensation for the Kerr effect. By selecting a carrier wavelength of the optical pump signal to be closer to a resonance of the standing wave optical resonator³ whose wavelength has been shifted higher in wavelength in a stop bandwidth of the Bragg grating, a reduction in wavelength due to the Kerr effect can be completely or partially compensated. Optionally, the higher wavelength shift of the resonance due to the Bragg resonator is substantially equal to the lower wavelength shift of the resonance due to the Kerr effect. Upon receipt of an optical pump signal having a power level above a threshold power level, the standing wave optical resonator is configured to generate a frequency comb upon receipt of. Because the standing wave optical resonator with a Bragg grating only wavelength shifts, and does not split resonances, the power level is lower for a standing wave optical resonator ¹ A standing wave optical resonator means an optical resonator in which optical signals travel in two opposite directions. ² An optical frequency comb means optical spectra consisting of frequency components, wherein each pair of adjacent frequency components are separated by a same frequency. The optical frequency comb is generated in the standing wave optical resonator utilizing a Bragg grating due to four wave nonlinear mixing. ³ Including the Bragg grating including a Bragg grating than for a travelling wave optical resonator including a Bragg grating.

The standing wave optical resonator includes a first mirror, the Bragg grating, and a second mirror. The Bragg grating has a first port optically coupled to the first mirror, and a second port optically coupled to the second mirror.

A portion of an optical pump signal is transmitted through the first mirror to the Bragg grating. The optical pump signal has a carrier wavelength in a stop bandwidth of the Bragg grating which is closer to a resonance shifted higher in wavelength than to an adjacent resonance shifted lower in wavelength. Optionally, an increase in wavelength, of the resonance shifted higher in wavelength, due to the Bragg grating equals a reduction of wavelength of such resonance due to the Kerr effect. Optionally, a wavelength of the optical pump signal equals a wavelength of a resonance of the SWOR in a stop bandwidth of the Bragg grating, wherein the wavelength of the resonance of the SWOR was shifted higher by the Bragg grating.

When the optical pump signal has a carrier wavelength in a stop bandwidth of the Bragg grating which is closer to a resonance shifted higher in wavelength than to an adjacent resonance shifted lower in wavelength and a power level of the portion of the optical pump signal transmitted into the standing wave optical resonator exceeds a threshold power level, then an optical frequency comb is generated in the standing wave optical resonator.

Optionally, the optical frequency comb includes spectral components whose wavelengths correspond to a subset of the wavelengths of the resonances of the standing wave optical resonator. Thus, *e.g.*, spectral components of the optical frequency comb may occur at a wavelength of every fourth, fifth, sixth, seventh, eighth, ninth, or tenth resonance of the standing wave optical resonator.

Photons of the optical frequency comb make repeated trips between the first mirror and the second mirror in the standing wave optical resonator. Each time the optical frequency comb is incident on the first mirror, some photons of the optical frequency comb are transmitted through the first mirror.

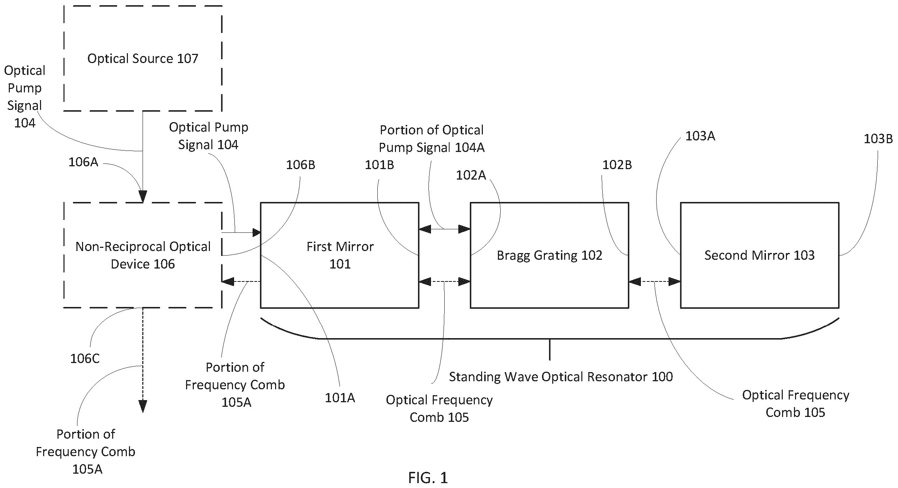

FIG. 1 illustrates a block diagram of one embodiment of a standing wave optical resonator 100. The standing wave optical resonator 100 includes a first mirror 101, a Bragg grating 102, and a second mirror 103. Each of the illustrated components of the standing wave optical resonator 100 may be formed by planar optical waveguide (on a substrate), optical fiber, a plane mirror, or any other means of forming the corresponding optical component. Optionally, the standing wave optical resonator 100 may include optical components formed in different ways, *e.g.*, using planar optical waveguide and optical fiber.

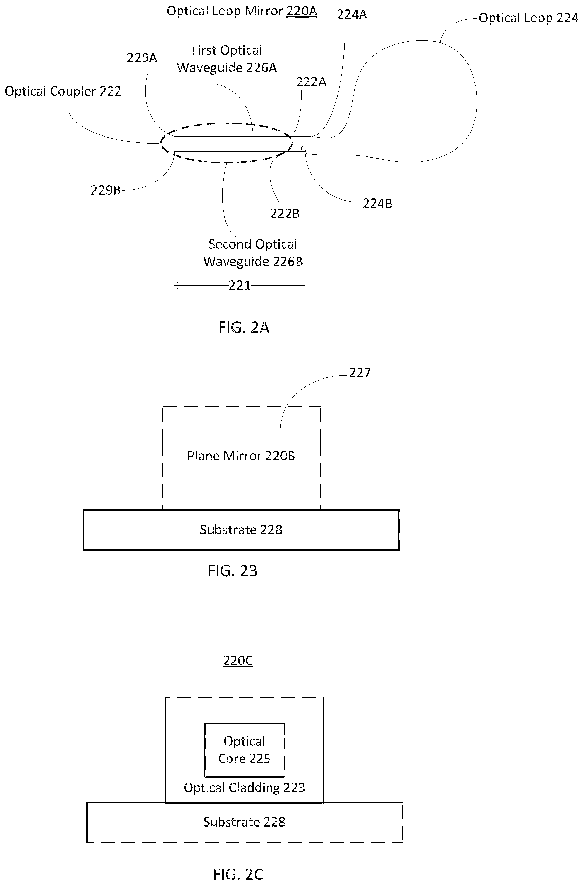

Each of the first mirror 101 and the second mirror 103 may be formed by one of different mirror types, *e.g*., an optical loop mirror (OLM) or a plane mirror. FIG. 2A illustrates a block diagram of one embodiment of an optical loop mirror 220A. The optical loop mirror 220A comprises an optical coupler 222 and an optical loop 224. The optical coupler 222 includes a first optical waveguide 226A and a second optical waveguide 226B which are substantially parallel along an axis 221 of propagation of an optical signal through each of the first and the second optical waveguides 226A, 226B. The optical coupler (OC) 222 includes a first OC port 222A, a second OC port 222B, a third OC port, and a fourth OC port.

The optical loop (OL) 224 includes a first OL port 224A and a second OL port 224B. The first OL port 224A is optically coupled to the first OC port 222A. The second OL port 224B is optically coupled to the second OC port 222B.

The first optical loop mirror (OLP) port 229A is the third OC port which is a port the first optical waveguide 226A opposite the port of the first optical waveguide which is the first OC port 222A. The second OLP port 229B is a fourth OC port which is a port the second optical waveguide 226B opposite the port of the second optical waveguide which is the second OC port 222B.

FIG. 2B illustrates a plan view of a plane mirror 220B on or over a substrate 228. Each of at least one reflective surface 227 of the plane mirror 220B is in a plane substantially orthogonal to the substrate 228. Optionally, at least one reflective surface 227 of the plane mirror 220B is configured to reflect a portion of an incident optical signal propagating in the SWOR 100.

Returning to FIG. 1 and as discussed elsewhere herein, the standing wave optical resonator 100 or one or more components thereof may be formed by planar optical waveguide. Such components included without limitation one or more loop mirrors and/or the Bragg grating 102. FIG. 2C illustrates a cross section 220C of one embodiment of planar optical waveguide used to form the standing wave optical resonator 100 or one or more components thereof. A core 225, *e.g.*, silicon nitride, is formed in cladding 223, *e.g.*, silicon dioxide. The cladding 223 is formed on or over the substrate 228, *e.g.*, an insulator for example undoped silicon. The cladding 223 has the index of refraction lower than an index of refraction of the core 225.

Returning to FIG. 1, the Bragg grating (BG) 102 includes a first BG port 102A and a second BG port 102B. The Bragg grating 102 may be one of different structures known in the art.

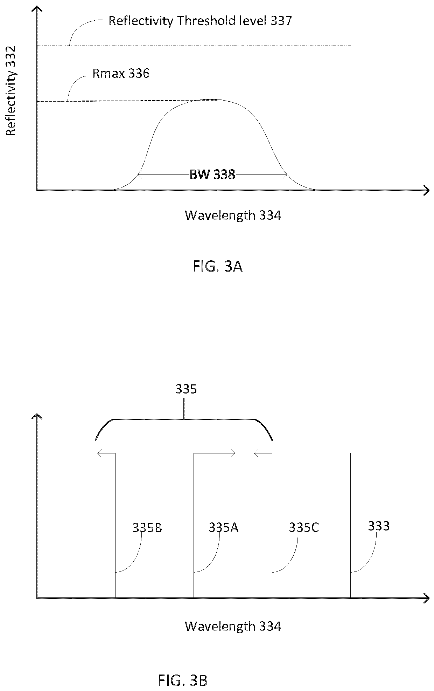

The Bragg grating 102 is used to compensate for a reduction, due to the Kerr effect, in wavelength of a resonance which is closest in a wavelength of an optical pump signal. FIG. 3A illustrates a reflectivity 332, at one port of the Bragg grating 102, with respect to optical wavelength (or wavelength) 334. In a stop bandwidth (BW) 338 of the Bragg grating 102, the port of the Bragg grating 102 has a reflectivity 332 greater than zero. In such bandwidth 338, there is a maximum reflectivity (Rmax 336) that occurs at a wavelength at which the Bragg grating 102 provides maximum attenuation when serving as a notch filter. Optionally, the wavelength of the resonance closest to a carrier wavelength of the optical pump signal is located at a wavelength where the Bragg grating has the maximum reflectivity.

FIG. 3B illustrates a diagram of one embodiment of wavelength translation of a portion of resonances of the SWOR 100 due to the Bragg grating 102. Only a portion 335 of resonances of the SWOR 100, occurring in the bandwidth 338 where the port of the Bragg grating 102 has a reflectivity 332 greater than zero, have translated wavelengths. The Bragg grating 102 shifts the resonances of the portion 335 alternatively lower and higher in wavelength. The wavelength shift is greater (*e.g.*, for a first resonance 335A of the portion 335) at a wavelength where the Bragg grating port reflectivity is larger than the wavelength shift (*e.g*., for a resonance 335B, 335C of the portion 335) at a wavelength where the Bragg grating port reflectivity is smaller. The maximum wavelength shift occurs at wavelengths where the Bragg grating ports have maximum reflectivity. In the example illustrated by FIG. 3B, the first resonance 335A is shifted higher in wavelength. The second resonance 335B which is adjacent to and at a lower wavelength than the first resonance 335A is shifted lower in wavelength. The third resonance 335C which is adjacent to and at a higher wavelength than the first resonance 335A is shifted lower in wavelength. A resonance, *e.g.*, a fourth resonance 333, outside the stop bandwidth of the Bragg grating (*i.e*., where the reflectivity 332 at each port of the Bragg grating is zero) is not shifted in wavelength by the Bragg grating.

When the optical pump signal wavelength is closer to the first resonance 335A than to either of the second or third resonances 335B, 335C, then the increased wavelength of the first resonance 335A due to the Bragg grating can be used to completely or partially compensate for a reduction in wavelength of the first resonance 335A due to the Kerr effect. Thus, pairs of resonances adjacent in wavelength of at least a subset of the resonances of the standing wave optical resonator 100, including the first resonance 335A, are separated by a substantially constant wavelength. Thus, when the portion of optical pump signal incident in the standing wave optical resonator 100 has (a) a wavelength closer to the resonance shifted higher in wavelength by the Bragg grating than a resonance shifted lower in wavelength by the Bragg grating and has (b) a power level in excess of a threshold power level, the standing wave optical resonator 100 generates an optical frequency comb 105. The threshold power level for the standing wave optical resonator with a Bragg grating is lower than the threshold power level for a travelling wave optical resonator with a Bragg grating. Returning to FIG. 3A, optionally, the reflectivity of the Bragg grating 102 at the wavelength of such resonance shifted higher in wavelength which is optical pump signal carrier wavelength must be below a threshold reflectivity level 337 to ensure optical frequency comb generation.

Returning to FIG. 1, the first mirror (FM) 101 includes a first FM port 101A and a second FM port 101B. The first mirror 101 is configured to receive an optical pump signal 104 at the first FM port 101A and to transmit a portion of an optical frequency comb 105A from the first FM port 101A. The second FM port 101B is configured to receive an optical frequency comb 105 and to provide a portion of the optical pump signal 104A.

The first FM port 101A and the second FM port 101B each have a reflectivity that is less than one hundred percent, *i.e*., 100% - X, wherein X is a percentage of power of an optical signal transmitted through the first mirror 101 in a direction. The reflectivity of the first and the second FM ports 101A, 101B may be the same or different. Thus, another portion of the optical pump signal 104 is reflected from the first FM port 101A, *e.g.*, to the optional non-reciprocal optical device 106. Thus, another portion of the optical frequency comb is reflected from the second FM port 101B to the Bragg grating 102.

X_{first FM port} is a percent of the power of the optical pump signal 104 incident on the first FM port 101A which is transmitted through the first mirror 101 into the standing wave optical resonator 100. During each round trip, between the first and the second mirrors 101, 103, of a photon of the frequency comb 105, X_{second FM port} is a percent of the power of the optical frequency comb 105 incident on the second FM port 101B which is transmitted through the first mirror 101 from the standing wave optical resonator 100, *e.g.*, from the Bragg grating (and for example is transmitted into the optional non-reciprocal optical device 106). Optionally, the reflectivity of each of the first FM port 101A and the second FM port 101B is between 0.9 and 1, 0.95 and 1, or 0.97 and 1. Thus, optionally, X_{first SM port} and X_{second SM port} are each between respectively 0 and 10 percent, 0 and 5 percent, and 0 and 3 percent.

The second mirror (SM) 103 includes a first SM port 103A and a second SM port 103B. The first SM port is configured to receive the optical frequency comb 105 emitted from the Bragg grating 102. The first SM port 103A and the second SM port 103B each have a reflectivity that is less than one hundred percent, *i.e*., 100% - X, wherein X is a percentage of power of an optical signal transmitted through the second mirror 103 in a direction. The reflectivity of the first and the second SM ports 103A, 103B may be the same or different. Optionally, the second SM port 103B is optically unterminated.

X_{first SM port} is a percent of the power of the optical frequency comb not reflected back to the Bragg grating 102, *i.e.*, transmitted to the second SM port 103B (*e.g*., transmitted into free space). X_{second SM port} is a percent of the power of transmitted from the second SM port 103B to the first SM port 103A. Optionally, the reflectivity of each of the first SM port 103A and the second SM port 103B is between one and an average reflectivity of the first and the second FM ports 101A, 101B. Thus, optionally, X_{first SM port} and X_{second SM port} are each between zero percent and a percentage corresponding to one less the average reflectivity of the first and the second FM ports 101A, 101B; thus, substantially all of the optical frequency comb 105 is retained by the second mirror 103 in the SWOR 100.

Photons of the optical frequency comb 105 are reflected back and forth between the second FM port 101B of the first mirror 101 and the first SM port 103A of the second mirror 103; during each round trip, between the first and the second mirrors 101, 103, of photons of the optical frequency comb 105, X_{second FM port} percent of such photons, *i.e*., power, of the optical frequency comb 105 is transmitted from the first FM port 101A out of the standing wave optical resonator 100 through the first mirror 101.

Optionally, the standing wave optical resonator 100 includes a non-reciprocal optical device (NROD) 106. The optional non-reciprocal optical device 106 may be an optical circulator or an optical coupler. The optional non-reciprocal optical device 106 includes a first NROD port 106A configured to receive the optical pump signal 104, a second NROD port 106B configured to transmit the optical pump signal 104 and to receive the optical frequency comb 105, and a third NROD port 106C configured to transmit the optical frequency comb 105, *e.g*., to an external device which would utilize the optical frequency comb 105 generated by the SWOR 100. The second NROD port 106B is optically coupled to the first FM port 101A of the first mirror. Optionally, the first NROD port 106A is configured to be coupled to an optical source 107 (e*.g*., a laser).

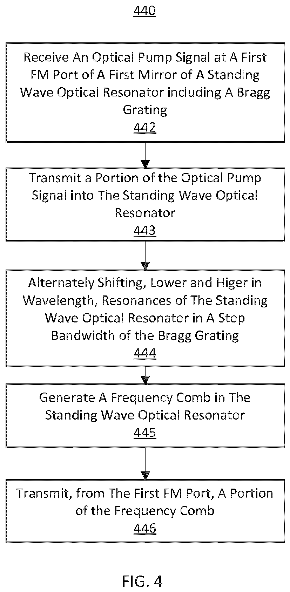

FIG. 4 illustrates a flow diagram of an exemplary method 440 of generating an optical frequency comb in a standing wave optical resonator including a Bragg grating. Exemplary method 440 may be implemented by the apparatuses illustrated in FIGS. 1- 2C. To the extent the methods herein are described herein as being implemented with one or more of the apparatuses illustrated in FIGS. 1-2C, it is to be understood that other embodiments can be implemented in other ways. Techniques described with respect to the embodiments illustrated by FIGS. 1-3B may be applicable to the embodiment FIG. 4.

The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 442, an optical pump signal is received at a first FM port of a first mirror of a standing wave optical resonator also including a Bragg grating having first and second BG ports and a second mirror including a first SM port optically coupled to the second BG port. The first mirror includes a first FM port and a second FM port. The second FM port is optically coupled to the first BG port. Optionally, the optical pump signal is received from a second port of an optional non-reciprocal optical device, *e.g.*, an optical circulator or an optical coupler, as discussed elsewhere herein. Optionally, the optical pump signal is generated by an optical source, *e.g.*, a laser, prior to being provided to the optional non-reciprocal optical device - as discussed elsewhere herein.

In block 443, a portion of the optical pump signal is transmitted into the standing wave optical resonator including the Bragg grating. In block 444, with the Bragg grating, alternately shifting, lower and higher in wavelength, resonances, of the standing wave optical resonator, in a stop bandwidth of the Bragg grating. A carrier wavelength of the optical pump signal is in the stop bandwidth and is closer to a resonance shifted higher in wavelength than to an adjacent resonance shifted lower in wavelength. In such case, the Bragg grating compensates for frequency dispersion of the standing wave resonator at or about such resonance whose wavelength has been shifted lower due to the Kerr effect, thus modifying optical path length at or about the wavelength of such resonance. The portion of the optical pump signal has a power level equal to or greater than a threshold power level at which the optical frequency comb is generated in the standing wave optical resonator.

In block 445, an optical frequency comb is generated in the standing wave optical resonator. In block 446, a portion of the optical frequency comb is transmitted from the first FM port of the first mirror.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g*., a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### Example Embodiments

Example 1 includes a standing wave optical resonator configured to generate an optical frequency comb, the standing wave optical resonator comprising: a first mirror (FM) comprising a first FM port configured to transmit a portion of the optical frequency comb, and a second FM port; a Bragg grating (BG) comprising a first BG port and a second BG port, wherein the first BG port is optically coupled to the second FM port, and wherein the Bragg grating is configured to alternately shift, lower and higher in wavelength, resonances of the standing wave optical resonator in a stop bandwidth of the Bragg grating; and a second mirror (SM) comprising a first SM port optically coupled to the second BG port.

Example 2 includes the standing wave optical resonator of Example 1, wherein a reflectivity of the first SM port is greater than a reflectivity of the second FM port.

Example 3 includes the standing wave optical resonator of any of Examples 1-2, wherein the first FM port is configured to receive an optical pump signal having a carrier wavelength in the stop bandwidth and which is closer to a resonance shifted higher in wavelength than to an adjacent resonance shifted lower in wavelength.

Example 4 includes the standing wave optical resonator of Example 3, wherein an amount of wavelength that the resonance shifted higher in wavelength is shifted higher equals an amount of wavelength that the resonance shifted in higher in wavelength is shifted lower in wavelength due to a Kerr effect.

Example 5 includes the standing wave optical resonator of any of Examples 1-4, wherein the first FM port is further configured to receive an optical pump signal having a power level greater than a threshold power level, necessary to generate the optical frequency comb in the standing wave optical resonator, that is less than another threshold power level necessary to generate the optical frequency comb in a travelling wave optical resonator comprising the Bragg grating.

Example 6 includes the standing wave optical resonator of any of Examples 1-5, wherein each of the first mirror and the second mirror comprises an optical loop mirror or a plane mirror.

Example 7 includes the standing wave optical resonator of any of Examples 1-6, wherein at least one of the first mirror, the second mirror, and the Bragg grating are formed from planar optical waveguide on a substrate.

Example 8 includes a method for generating an optical frequency comb with a standing wave optical resonator comprising a Bragg grating, a first mirror (FM), a second mirror (SM), the method comprising: receiving, at a first FM port of the first mirror, an optical pump signal having a carrier wavelength in a stop bandwidth of the Bragg grating and which is closer to a resonance shifted higher in wavelength than to an adjacent resonance shifted lower in frequency, wherein the first mirror is optically coupled to a first port of the Bragg grating and the second mirror is optically coupled to a second port of the Bragg grating; transmitting a portion of the optical pump signal into the standing wave optical resonator; with the Bragg grating, alternately shifting, lower and higher in wavelength, resonances of the standing wave optical resonator in the stop bandwidth of the Bragg grating; generating the optical frequency comb in the standing wave optical resonator; and transmitting a portion of the optical frequency comb from the first FM port of the first mirror.

Example 9 includes the method of Example 8, wherein a reflectivity of a first SM port is greater than a reflectivity of a second FM port.

Example 10 includes the method of any of Examples 8-9, wherein a reflectivity of the Bragg grating at the wavelength, of the resonance shifted higher in wavelength, equals a maximum reflectivity of the Bragg grating.

Example 11 includes the method of any of Examples 8-10, wherein an amount of wavelength that the resonance shifted higher in wavelength is shifted higher equals an amount of wavelength that the resonance shifted in higher in wavelength is shifted lower in wavelength due to a Kerr effect.

Example 12 includes the method of any of Examples 8-11, wherein the first FM port is further configured to receive the optical pump signal having at least a threshold power level, necessary to generate the optical frequency comb in the standing wave optical resonator, that is less than another threshold power level necessary to generate the optical frequency comb in a travelling wave optical resonator comprising the Bragg grating.

Example 13 includes the method of any of Examples 8-12, wherein receiving the optical pump signal comprises receiving the optical pump signal from a first port of either an optical circulator or an optical coupler.

Example 14 includes the method of any of Examples 8-13, wherein transmitting a portion of the optical frequency comb comprises transmitting another portion of the optical frequency comb from a second port of either an optical circulator or an optical coupler.

Example 15 includes an apparatus for generating an optical frequency comb, the apparatus comprising: a non-reciprocal optical device (NROD) including a first NROD port configured to receive an optical pump signal, a second NROD port configured to transmit a portion of the optical pump signal and to receive a portion of the optical frequency comb, and a third NROD port configured to transmit a portion of the portion of the optical frequency comb; and a standing wave optical resonator, comprising: a first mirror (FM) comprising (a) a first FM port optically coupled to the first NROD port and configured to transmit the portion of the optical frequency comb to the first NROD port and to receive the portion of the optical pump signal from the first NROD port, and (b) a second FM port; a Bragg grating (BG) comprising a first BG port and a second BG port, wherein the first BG port is optically coupled to the second FM port, and wherein the Bragg grating is configured to alternately shift, lower and higher in wavelength, resonances of the standing wave optical resonator in a stop bandwidth of the Bragg grating, wherein the optical pump signal has a carrier wavelength in the stop bandwidth and which is closer to a resonance shifted higher in wavelength than to an adjacent resonance shifted lower in wavelength; and a second mirror (SM) comprising a first SM port optically coupled to the second BG port.

Example 16 includes the apparatus of Example 15, wherein a reflectivity of the first SM port is less than one hundred percent and greater than a reflectivity of the second FM port.

Example 17 includes the apparatus of any of Examples 15-16, wherein an amount of wavelength that the resonance shifted higher in wavelength is shifted higher equals an amount of wavelength that the resonance shifted in higher in wavelength is shifted lower in wavelength due to a Kerr effect.

Example 18 includes the apparatus of any of Examples 15-17, wherein the first FM port is further configured to receive the portion of the portion of the optical pump signal having a power level greater than a threshold power level, necessary to generate the optical frequency comb in the standing wave optical resonator, that is less than another threshold power level necessary to generate the optical frequency comb in a travelling wave optical resonator comprising the Bragg grating.

Example 19 includes the apparatus of any of Examples 15-18, wherein each of the first mirror and the second mirror comprises an optical loop mirror or a plane mirror.

Example 20 includes the apparatus of any of Examples 15-19, wherein the non-reciprocal optical device is an optical circulator or an optical coupler.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A standing wave optical resonator configured to generate an optical frequency comb, the standing wave optical resonator comprising:
a first mirror (FM) comprising a first FM port configured to transmit a portion of the optical frequency comb, and a second FM port;
a Bragg grating (BG) comprising a first BG port and a second BG port, wherein the first BG port is optically coupled to the second FM port, and wherein the Bragg grating is configured to alternately shift, lower and higher in wavelength, resonances of the standing wave optical resonator in a stop bandwidth of the Bragg grating; and
a second mirror (SM) comprising a first SM port optically coupled to the second BG port.

2. The standing wave optical resonator of claim 1, wherein a reflectivity of the first SM port is greater than a reflectivity of the second FM port.

3. The standing wave optical resonator of claim 1, wherein the first FM port is configured to receive an optical pump signal having a carrier wavelength in the stop bandwidth and which is closer to a resonance shifted higher in wavelength than to an adjacent resonance shifted lower in wavelength.

4. The standing wave optical resonator of claim 3, wherein an amount of wavelength that the resonance shifted higher in wavelength is shifted higher equals an amount of wavelength that the resonance shifted in higher in wavelength is shifted lower in wavelength due to a Kerr effect.

5. The standing wave optical resonator of claim 1, wherein the first FM port is further configured to receive an optical pump signal having a power level greater than a threshold power level, necessary to generate the optical frequency comb in the standing wave optical resonator, that is less than another threshold power level necessary to generate the optical frequency comb in a travelling wave optical resonator comprising the Bragg grating.

6. A method for generating an optical frequency comb with a standing wave optical resonator comprising a Bragg grating, a first mirror (FM), a second mirror (SM), the method comprising:
receiving, at a first FM port of the first mirror, an optical pump signal having a carrier wavelength in a stop bandwidth of the Bragg grating and which is closer to a resonance shifted higher in wavelength than to an adjacent resonance shifted lower in frequency, wherein the first mirror is optically coupled to a first port of the Bragg grating and the second mirror is optically coupled to a second port of the Bragg grating;
transmitting a portion of the optical pump signal into the standing wave optical resonator;
with the Bragg grating, alternately shifting, lower and higher in wavelength, resonances of the standing wave optical resonator in the stop bandwidth of the Bragg grating;
generating the optical frequency comb in the standing wave optical resonator; and
transmitting a portion of the optical frequency comb from the first FM port of the first mirror.

7. The method of claim 6, wherein a reflectivity of a first SM port is greater than a reflectivity of a second FM port.

8. The method of claim 6, wherein a reflectivity of the Bragg grating at the wavelength, of the resonance shifted higher in wavelength, equals a maximum reflectivity of the Bragg grating.

9. The method of claim 6, wherein an amount of wavelength that the resonance shifted higher in wavelength is shifted higher equals an amount of wavelength that the resonance shifted in higher in wavelength is shifted lower in wavelength due to a Kerr effect.

10. The method of claim 6, wherein the first FM port is further configured to receive the optical pump signal having at least a threshold power level, necessary to generate the optical frequency comb in the standing wave optical resonator, that is less than another threshold power level necessary to generate the optical frequency comb in a travelling wave optical resonator comprising the Bragg grating.
